# EUROPEAN PATENT SPECIFICATION

(11) **EP 2 586 906 B1**
(45) Date of publication and mention of the grant of the patent: **24.06.2020**
(21) Application number: 11186571.3
(22) Date of filing: 25.10.2011
(51) Int. Cl.: D06F 58/32, D06F 58/20

(54) **A laundry dryer with a heat pump system**
Wäschetrockner mit Wärmepumpensystem
Sèche-linge avec système de pompe à chaleur

(43) Date of publication of application: 01.05.2013
(73) Proprietor: Electrolux Home Products Corporation N.V., 1130 Brussels (BE)
(72) Inventor: Bison, Alberto, 33080 Porcia (PN) (IT); Cavarretta, Francesco, 33080 Porcia (PN) (IT)
(74) Representative: Electrolux Group Patents

(56) References cited:
- EP-A1- 1 614 976
- EP-A1- 2 333 141
- EP-B1- 2 171 150
- WO-A2-2011/072999
- DE-A1-102005 041 145
- JP-A- H02 290 471
- JP-A- 2003 265 889
- JP-A- 2007 289 558
- US-A1- 2007 151 267
- US-A1- 2011 005 097

## Description

The present invention relates to a laundry dryer with a heat pump system according to the preamble of claim 1.

A laundry dryer with a heat pump system is an efficient way to dry laundry by low energy consumption. In a conventional heat pump laundry dryer an air stream flows in a close air stream circuit. The air stream is moved by a fan, passes through a laundry drum, removes water from wet laundry, is then cooled down and dehumidified in an evaporator, heated up in a condenser and at last re-inserted into the laundry drum again. The refrigerant instead is compressed by a compressor, condensed in the condenser, laminated in expansion means and then vaporized in the evaporator.

In the most laundry dryers the heat pump system works in an on-off mode, wherein the compressor has one rotational speed. The operation of the heat pump system can be optimized by a variable rotational speed compressor. However, in this case, the Applicant has found that in order to obtain better performances, variable expansion means can be provided to adapt the lamination work to the variation of the rotational speed of the compressor.

In fact, it has been found that higher rotational speed of the compressor and lower rotational speed of the compressor requires different lamination work for the compressor to operates in an effective way.

EP 1 612 976 A1 discloses a drying apparatus comprising a heat pump system, wherein variable expansion means and the compressing performance of the compressor are controlled in response to the pressure of the refrigerant detected at the outlet of the compressor. However, this control method is complex and requires pressure and temperature sensors and an appropriate feedback line.

JP 2007 289558 discloses a heat pump device and the heating means such as a heater are provided inside the washing and drying machine provided with a rotating washing tub.

During drying, the temperature of drying air is quickly elevated by the heating means, and an optimum dew-point temperature corresponding to the progress of a drying operation is held by the adjustment of heat pump device ability.

EP 2 171150 discloses a to a washer/dryer that can operate at low energy, fast drying and hygienic drying modes by maintaining different levels of pressure and temperature decreases of the refrigerant fluid between the condenser and the evaporator by means of using a valve and at least two throttle elements between the condenser and the evaporator.

JP 2003 265889 discloses a washing and drying machine comprising a storage for accommodating the laundry, a suction opening for sucking an air within the storage, a discharge opening for again discharging the air sucked from the suction opening into the storage via an air channel, a blower for sending the air within the air channel, a cooler and a radiator arranged within the air channel, a drain opening for draining from the cooler, and a water supplying conduit for supplying water into the storage and a cooling medium that changes its state within the radiator in a super-critical region.

WO 2011/072999 discloses a laundry dryer comprising a heat pump, wherein the expansion system has a variable restriction which may be controllable by a control unit in response to signals from a sensor unit.

DE 10 2005 041145 discloses a dryer having a heat pump heating system comprising a compressor with changeable output. A controller is arranged in the dryer for controlling and/or regulating the output of the compressor based on residual moisture in the laundry that is to be dried or based on temperature of the heat pump heating system.

EP 2 333 141 discloses a clothes dryer provided a heat pump. The rotational speed of a compressor is changed by controlling frequency, and the clothes dryer can be operated by selection of either a quick-drying mode for drying the laundry in a relatively short time by changing a drive frequency of the compressor or a saving mode for drying the laundry in a time longer than the time of the quick-drying mode.

US 2011/005097 discloses a controlling method of a clothes-treating apparatus, wherein a predetermined operational condition of a compressor included in a heat pump to supply dry air to clothes placed therein may be maintained normally.

US 2007/0151267 A1 discloses a variable-capacity air conditioner applicable in devices like driers. The heat pump of the air conditioner comprises two serially connected capillary tubes, wherein one tube comprises a bypass with a shutter valve. The valve is controlled in dependency of the detected voltage or current supplied to the compressor motor. When the detected motor current is larger than a predetermined value the valve is opened, whereby the pressure drop is reduced. When the detected motor current is equal or less than a predetermined value, the valve is closed, i.e. refrigerant passes both tubes, whereby the pressure drop is increased.

JP 02290471 A discloses an air conditioner with a heat pump having a variable expansion means with two or three capillary tubes. Capillaries can be bypassed by means of valves. After a predetermined time the compressor speed is detected. When the compressor speed is higher than a predetermined value, a temperature detector detects the temperature of the refrigerant discharged from the compressor. When the detected temperature is lower/higher than a predetermined temperature the valve is closed/opened.

It is an object of the present invention to provide a laundry dryer with a heat pump system, in which the lamination work of the expansion means can be adapted by low complexity.

The object of the present invention is achieved by the laundry dryer with a heat pump system according to claim 1.

According to the present invention, the laundry dryer comprises a control unit the control unit is adapted to adjust the variable expansion means in response to at least a compressor quantity representative of the operation of the compressor and/or to the drying cycle selected by the user, wherein said compressor quantity is at least one of the following: rotational speed of the compressor (14),
supply current/voltage frequency of the compressor motor.

The control unit is adapted to monitor or determine the rotational speed of the compressor and/or the supply current/voltage frequency of the compressor motor and to operate the variable expansion means accordingly.

The control unit is adapted to receive signals representative of the rotational speed of the compressor and/or the supply current/voltage frequency of the compressor motor or the control unit is adapted to receive signal representative of predetermined parameters, which are the basis for the determination of rotational speed of the compressor and/or the supply current/voltage frequency of the compressor motor.

The control unit is adapted to set the variable expansion means to a reduced lamination work, when the output of the compressor is high or starts to increase or increases, the control unit is adapted to set the variable expansion means to an increased lamination work, when the output of the compressor is low or starts to decrease or decreases, output of the compressor being the rotational speed of the compressor and/or the supply current/voltage frequency of the compressor motor.

According to an embodiment not part of the claimed invention, the laundry dryer comprises at least one drying cycle, in which the compressor operates at different outputs, and/or comprising different drying cycles, wherein the output of the compressor is constant or substantially constant in each drying cycle, but different from drying cycle to drying cycle, wherein the control unit adjusts the variable expansion means according to the drying cycle selected by the user.

According to an embodiment not part of the claimed invention, the control unit is adapted to set the variable expansion means to a reduced lamination work according to an increasing output profile of the compressor for the selected drying cycle and to set the variable expansion means to an increased lamination work according to a decreasing output profile of the compressor for the selected drying cycle.

According to an embodiment not part of the claimed invention, the control unit actuates the compressor to increase the output established by the selected drying cycle, and automatically actuates the variable expansion means to a reduced lamination work, further wherein the control unit actuates the compressor to decrease the output established by the selected drying cycle, and automatically actuates the variable expansion means to an increased lamination work.

Preferably, the variable expansion means comprise at least two capillary tubes wherein at least one of said capillary tubes is switched or switchable by at least one valve.

Preferably, the expansion means comprises at least two parallel series of a capillary tube and a corresponding on-off valve in each case, wherein the capillary tubes have different lengths and/or different cross-sections.

Preferably, the expansion means comprises at least two serial capillary tubes, wherein at least one of the capillary tubes is bypassed by an on-off valve.

Preferably, the capillary tubes have different lengths and/or different cross-sections.

Preferably, the capillary tubes have the same lengths and cross-sections.

Preferably, the expansion means comprises two capillary tubes and a three-way valve, wherein the capillary tubes are alternatingly switchable by the three-way valve and the capillary tubes have different lengths and/or different cross-sections.

Preferably, the expansion means comprises at least one lamination valve including a variable opening degree, so the lamination work at said expansion means is adjustable.

Preferably, the control unit is provided for adapting the lamination work at the expansion means to a warm-up phase and a steady state phase of the process of the heat pump system, wherein the warm-up phase corresponds with a higher lamination work and the steady state phase corresponds with lower lamination work.

The novel and inventive features believed to be the characteristic of the present invention are set forth in the appended claims.

The invention will be described in further detail with reference to the drawings, in which
- FIG 1: shows a schematic diagram of a heat pump system for a laundry dryer according to the present invention,
- FIG 2: shows a detailed schematic diagram of expansion means of the heat pump system for the laundry dryer according to a first embodiment of the present invention,
- FIG 3: shows a detailed schematic diagram of expansion means of the heat pump system for the laundry dryer according to a second embodiment of the present invention,
- FIG 4: shows a detailed schematic diagram of expansion means of the heat pump system for the laundry dryer according to a fourth embodiment of the present invention,
- FIG 5: shows a detailed schematic diagram of expansion means of the heat pump system for the laundry dryer according to a fifth embodiment of the present invention,
- FIG 6: shows a schematic diagram of the power and motor frequency as function of time for a compressor of the heat pump system for the laundry dryer according to the present invention,
- FIG 7: shows a schematic diagram of the motor frequencies as function of time for the compressor of the heat pump system for the laundry dryer according to the present invention,
- FIG 8: shows a schematic diagram of the motor speeds as function of time for the compressor of the heat pump system for the laundry dryer according to the present invention,
- FIG 9: shows a schematic diagram of the motor frequency as function of time for the compressor of the heat pump system for the laundry dryer according to the present invention, and
- FIG 10: shows a schematic diagram of the motor speeds as function of time for the compressor of the heat pump system for the laundry dryer according to the present invention.

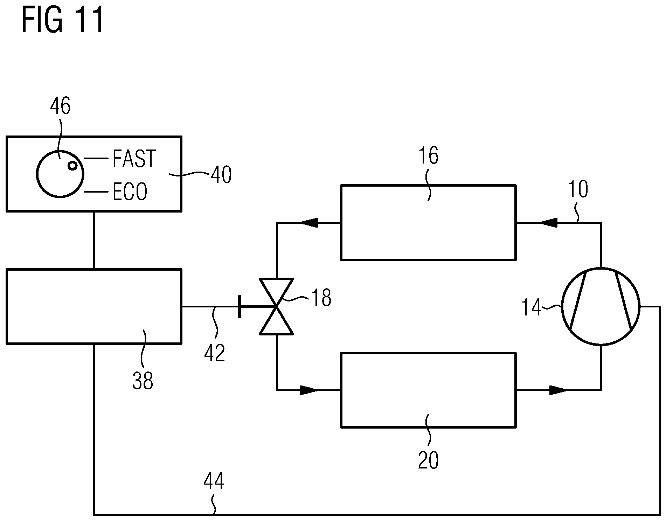

- FIG 11: shows a schematic diagram of a refrigerant circuit of the heat pump system with a control unit for the laundry dryer according to the present invention.

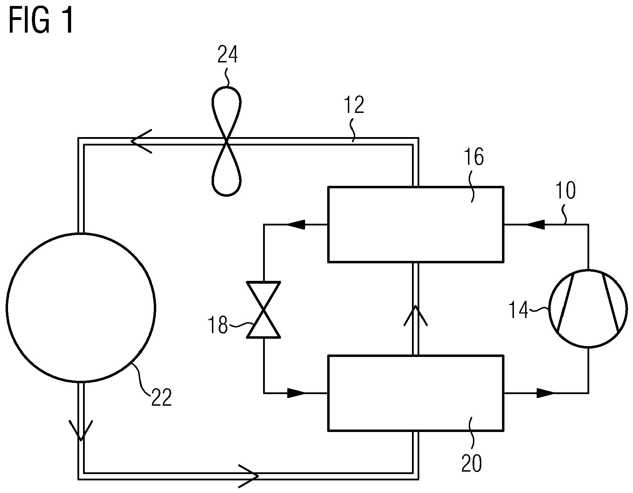

FIG 1 illustrates a schematic diagram of a heat pump system for a laundry dryer according to a first embodiment of the present invention. The heat pump system includes a closed refrigerant circuit 10 and a drying air stream circuit 12.

The drying air stream circuit 12 is preferably a closed loop in which the process air is continuously circulated through the laundry storing chamber. However it may also be provided that a (preferably smaller) portion of the process air is exhausted from the process air loop and fresh air (e.g. ambient air) is taken into the process air loop to replace the exhausted process air. And/or the process air loop is temporally opened (preferably only a short section of the total processing time) to have an open loop discharge.

The refrigerant circuit 10 includes a compressor with variable output 14, a first heat exchanger 16, variable expansion means 18 and a second heat exchanger 20. The compressor 14, the first heat exchanger 16, the variable expansion means 18 and the second heat exchanger 20 are switched in series and form a closed loop.

The drying air stream circuit 12 includes the first heat exchanger 16, the second heat exchanger 20, a laundry treatment chamber 22, preferably a rotatable drum 22 and a drying air stream fan 24. The first heat exchanger 16 and the second heat exchanger 20 form the thermal coupling between the refrigerant circuit 10 and the drying air stream circuit 12.

The refrigerant circuit 10 is subdivided into a high pressure portion and a low pressure portion. The high pressure portion extends from the outlet of the compressor 14 via the first heat exchanger 16 to the inlet of the variable expansion means 18. The low pressure portion extends from the outlet of the variable expansion means 18 via the second heat exchanger 20 to the inlet of the compressor 14.

In this example, the first heat exchanger 16 acts as a condenser, and the second heat exchanger 20 acts as an evaporator. However, when the refrigerant operates at least at the critical pressure in the high pressure portion of the refrigerant circuit 10, then the first heat exchanger 16 acts as a gas cooler since the refrigerant is in the gaseous state during the cycle. Similar, when the refrigerant operates at least at the critical pressure in the low pressure portion of the refrigerant circuit 10, then the second heat exchanger 16 acts as a gas heater since the refrigerant is in the gaseous state during the cycle.

The compressor 14 with variable output compresses and heats up the refrigerant. The first heat exchanger 16 cools down the refrigerant in the refrigerant circuit 10 and heats up the air stream in the drying air stream circuit 12, before the air stream is re-inserted into the laundry drum 26. The variable expansion means 18 laminates the refrigerant from a higher pressure to a lower pressure. The second heat exchanger 20 cools down and dehumidifies the air stream, after said air stream has passed the laundry drum 22 in the drying air stream circuit 12. The drying air stream is driven by the air stream fan 24. The output of the compressor 14 is adjustable.

The compressor 14 with variable output is adapted to treat different refrigerant mass flow rate depending on the rotation speed thereof. An electronic controller is provided to change the rotational speed of the electric motor of the compressor in response to a predetermined feedback.
As an example, the electronic controller can vary the operating frequency of the current/voltage absorbed by the compressor electric motor in order to adjust the rotational speed and the power of the compressor. The electronic controller can be an inverter, which drives the electric motor of the compressor 14.

The laundry dryer comprises a control unit 38 connected to the compressor 14 via a compressor control line 44. The control unit 38 is adapted to control the compressor 14 so as to vary the rotational speed and/or the supply current/voltage frequency and/or power/current absorbed by the compressor.

The control unit 38 operates the electronic controller (e.g. inverter) so as to drive the electric motor of the compressor 14.

Rotational speed of the compressor is the speed of the shaft connected to the device that compresses the refrigerant during the compressor running, the rotational speed is substantially equals to the rotational speed of the motor. Supply current/voltage frequency is the frequency of the current/voltage supplied to the compressor motor by the electronic controller to vary the rotational speed of the compressor.

Additionally, the laundry dryer can comprise a drying cycle (operation mode) in which the rotational speed and/or the supply current/voltage frequency and/or power/current absorbed by the compressor varies over the drying time.
In addition or alternatively, the laundry dryer can comprise at least two operational modes in which the compressor output is substantially constant or at least substantially constant over most of the drying time but the output is different from one cycle to another.

Preferably, the laundry dryer comprises a control panel 40 for the user to select the available operation modes of the drying cycle/s. The control unit 38 is adapted to receive from the control panel 40 information regarding the drying cycle selected by the user.
It has to be noted that the control unit 38 may be a standalone electronic unit, or it may be included in a system which performs overall control of the laundry dryer, including interfacing with a user to display operational information, select drying programs (i.e. control panel) and set operational parameters for such programs.
Additionally the electronic controller (e.g. inverter) can be integrated in the control unit 38.

The user can select different operation modes of the drying cycle/s on said control panel40 via, for example, a suitable changeover switch 46. For example, a fast operation mode corresponds with a relative high rotational speed of the compressor 14. Further, an eco (or night) mode corresponds with a lower rotational speed of the compressor 14. In dependence of the selection of the user, the control unit activates the corresponding rotational speed of the compressor 14.

Clearly other operation modes can be envisaged having specific output of the compressor for drying different type of textile, different weight of the laundry, for achieving different drying degree of the laundry.

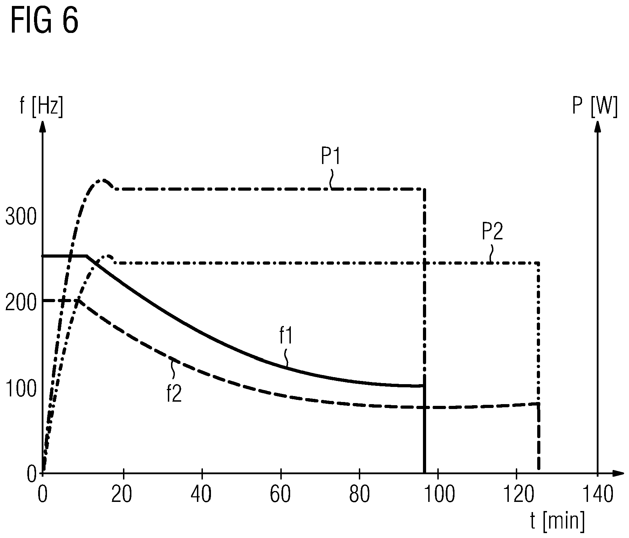

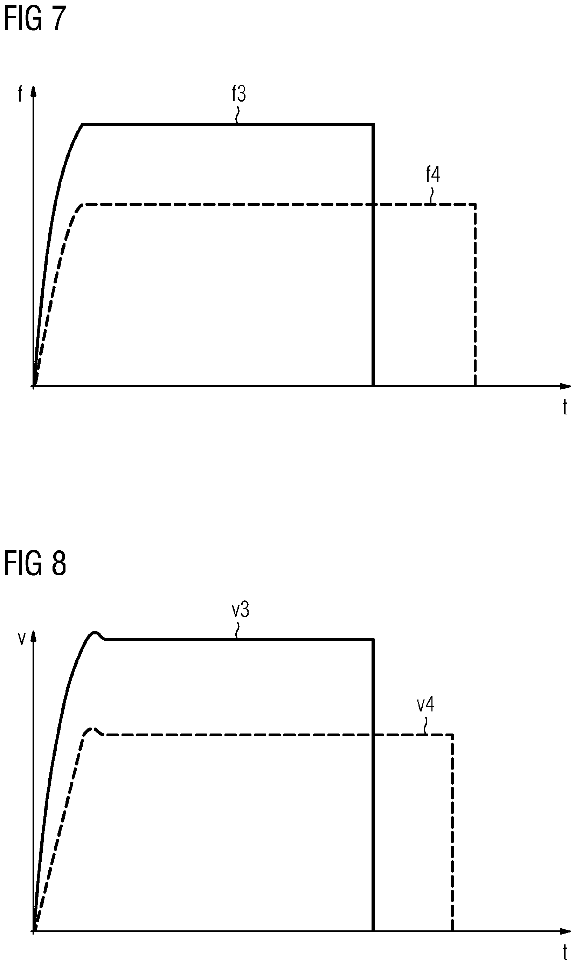

FIG 6 shows an exemplary schematic diagram of the power P and supply current/voltage frequency f as function of time t for the compressor 14. FIG 7 clarifies further the relation between the power P and the supply current/voltage frequency f.

FIG 6 shows a first supply current/voltage frequency f1 and a corresponding first power P1 as well as a second supply current/voltage frequency f2 and a corresponding second power P2. The frequencies f1 and f2 decrease during the drying cycle, while the corresponding powers P1 and P2 remain constant.
The rotational speed of the compressor is linked to the supply current/voltage frequency f.

FIG 7 shows a schematic diagram of the supply current/voltage frequencies f3 and f4 as function of time t for the compressor 14. The supply current/voltage frequency f3 is higher than the supply current/voltage frequency f4. The supply current/voltage frequency f3 relates, for example, to the fast mode of the drying cycle as previously mentioned. The supply current/voltage frequency f4 relates, for example, to the eco (or night) mode of the drying cycle. The drying cycle of the eco mode requires more time than the drying cycle of the fast mode but less energy.

FIG 8 shows a schematic diagram of the motor speeds v3 and v4 as function of time t for the compressor 14 of the heat pump system for the laundry dryer according to the present invention. The motor speed v3 is higher than the motor speed v4. The motor speed v3 can relate, for example, to the fast mode of the drying cycle. The motor speed v4 can relate, for example, to the eco (or night) mode of the drying cycle. The drying cycle of the eco mode requires more time than the drying cycle of the fast mode but less energy.

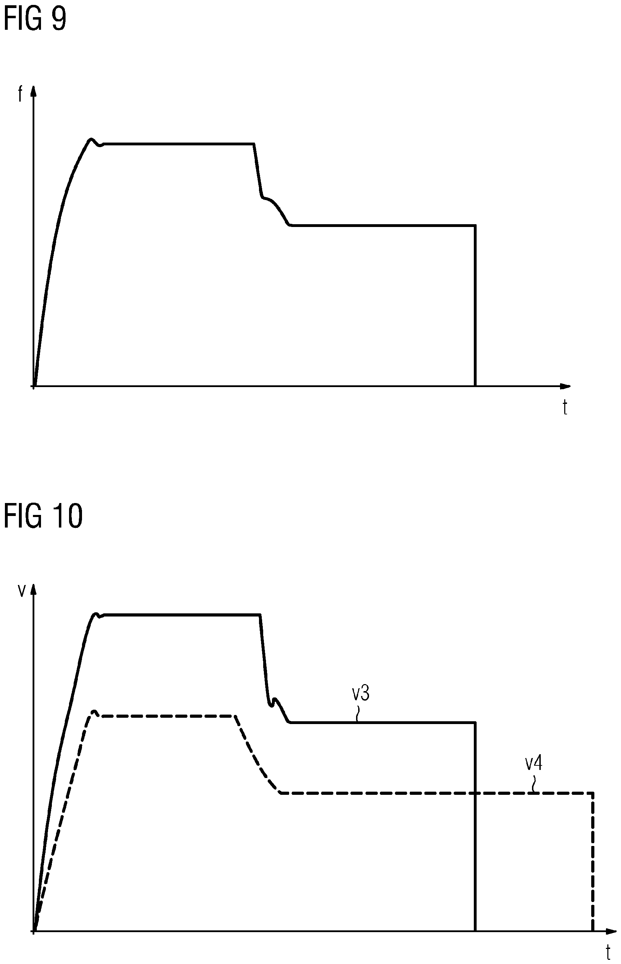

FIG 9 shows a schematic diagram of the supply current/voltage frequency f as function of time for the compressor 14 that represent another possible operation mode. In FIG 10 the supply current/voltage frequency f has been reduced after about the half time of the drying cycle.

FIG 10 shows a schematic diagram of the motor speeds v3 and v4 as function of time for the compressor 14. The motor speed v3 relates, for example, to another possible fast mode of the drying cycle. The motor speed v4 relates, for example, to another possible eco mode of the drying cycle. In both cases the motor speeds v3 and v4 are reduced during the drying cycle. In the fast mode, the motor speed v3 is reduced after the half time of the drying cycle. In the eco mode, the motor speed v4 is reduced after about one third of the time of the drying cycle. The drying cycle of the eco mode requires more time than the drying cycle of the fast mode but less energy.

The variable expansion means 18 provide different lamination work according to the operational conditions of the heat pump system. The control unit 38 is connected to the variable expansion means 18 via a control line 42. The variable expansion means 18 are controlled in response to signal issued by the control unit 38 so as to adjust the pressure drop.

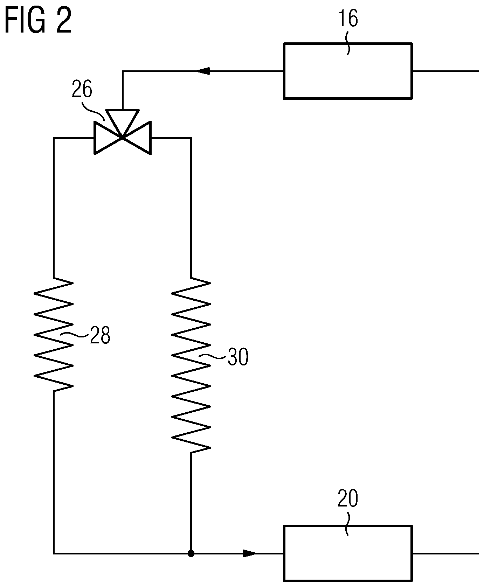

The variable expansion means can include at least two capillary tubes switchable by the control unit 38 to provide different lamination work. Figure 2 to 6 show some exemplary arrangements of above mentioned type that will be described in details in the following.

Alternatively the variable expansion means can include a variable expansion valve controllable by the control unit 38, for example the valve can be an electronic valve.

FIG 2 shows a detailed schematic diagram of expansion means 18 of the heat pump system for the laundry dryer according to an embodiment of the present invention. The expansion means 18 of the first embodiment include a three-way valve 26, a first capillary tube 28 and a second capillary tube 30.

The three-way valve 26 comprises three ports. A first port is connected to the outlet of the first heat exchanger 16. A second port is connected to the inlet of the first capillary tube 28. A third port is connected to the inlet of the second capillary tube 30.

The three-way valve 26 is provided to change over between the first capillary tube 28 and the second capillary tube 30, so that the refrigerant flows either through the first capillary tube 28 or through the second capillary tube 30. The first capillary tube 28 and the second capillary tube 30 have different geometric properties, so that the first capillary tube 28 and the second capillary tube 30 provide different lamination works.

In the example proposed, the lamination work increases with the length of the capillary tubes 28 and 30, assuming that the cross-section of the tubes is the same and the refrigerant flow rate is the same as well. The first capillary tube 28 is shorter than the second capillary tube 30. Thus, the second capillary tube 30 provides higher lamination work than the first capillary tube 28.
However, in a similar manner the lamination work increases with the increasing of the cross-section of the capillary tubes 28 and 30, assuming that the length of the tubes is the same and the refrigerant flow rate is the same as well.

In an alternative embodiments The three-way valve 26 can be arranged downstream of first capillary tube 28 and the second capillary tube 30.

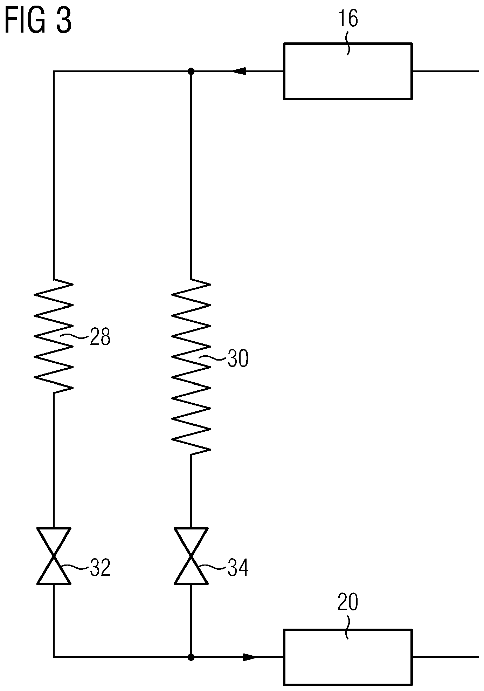

FIG 3 shows a detailed schematic diagram of expansion means 18 of the heat pump system for the laundry dryer according to another embodiment of the present invention. The expansion means 18 of the embodiment shown include the first capillary tube 28, the second capillary tube 30, a first on-off valve 32 and a second on-off valve 34.

The inlets of the first capillary tube 28 and the second capillary tube 30 are connected to the outlet of the first heat exchanger 16. The outlet of the first capillary tube 28 is connected to the inlet of the first on-off valve 32. In a similar way, the outlet of the second capillary tube 30 is connected to the inlet of the second on-off valve 34. Thus, the on-off valves 32 and 34 are arranged downstream the corresponding capillary tubes 28 and 30, respectively. The outlets of the first on-off valve 32 and the second on-off valve 34 are connected to the inlet of the second heat exchanger 20.

The first on-off valve 32 and the second on-off valve 34 are provided to select one of the capillary tubes 28 or 30. The first capillary tube 28 and the second capillary tube 30 have different geometric properties, so that the first capillary tube 28 and the second capillary tube 30 provides different lamination work. Since the first capillary tube 28 is shorter than the second capillary tube 30, the second capillary tube 30 provides higher lamination work than the first capillary tube 28 (assuming that the respective cross sections are the same).
Additionally, when both the on-off valve 32, 34 are in open position, the first and second capillary tube 28, 30 provide a cumulative lamination work different from the one generated by the first capillary tune 28 when only the first on-off valve 32 is open and by the second capillary tube 30 when only the second on-off valve 32 is open.

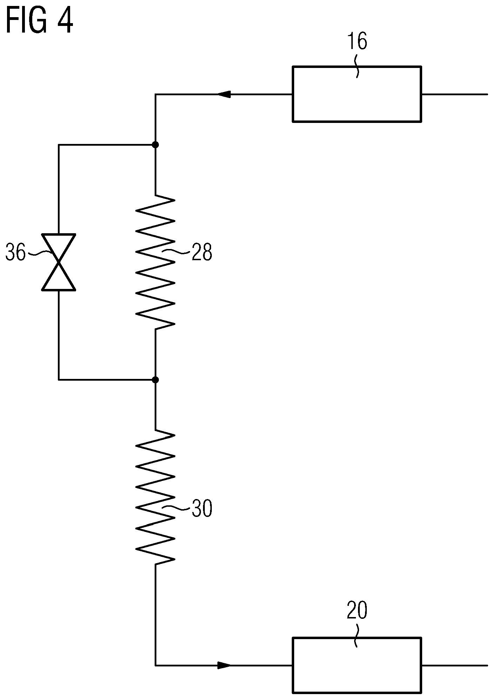

FIG 4 shows a detailed schematic diagram of expansion means 18 of the heat pump system for the laundry dryer according to another embodiment of the present invention. The expansion means 18 of the embodiment shown include the first capillary tube 28, the second capillary tube 30 and the bypass on-off valve 36.

The inlet of the first capillary tube 28 is connected to the outlet of the first heat exchanger 16. The inlet of the second capillary tube 30 is connected to the outlet of the first capillary tube 28. The outlet of the second capillary tube 30 is connected to the inlet of the second heat exchanger 20. Thus, the first capillary tube 28 and the second capillary tube 30 are connected in series. The bypass on-off valve 36 is connected in parallel to the first capillary tube 28.

Preferably, the bypass on-off valve 36 is provided along a bypass line comprising a bypass line inlet arranged between the inlet of the first capillary tube 28 and the outlet of the first heat exchanger 16 and a bypass line outlet arranged between the outlet of the first capillary tube 28 and inlet of the second capillary tube 30.

When the bypass on-off valve 36 is closed, then the refrigerant flows in the first capillary tube 28 and the second capillary tube 30. When the bypass on-off valve 36 is open, then the first capillary tube 28 is bypassed, and the refrigerant flows only in the second capillary tube 30. When the bypass on-off valve 36 is open, then the lamination work of the expansion means 18 decreases.

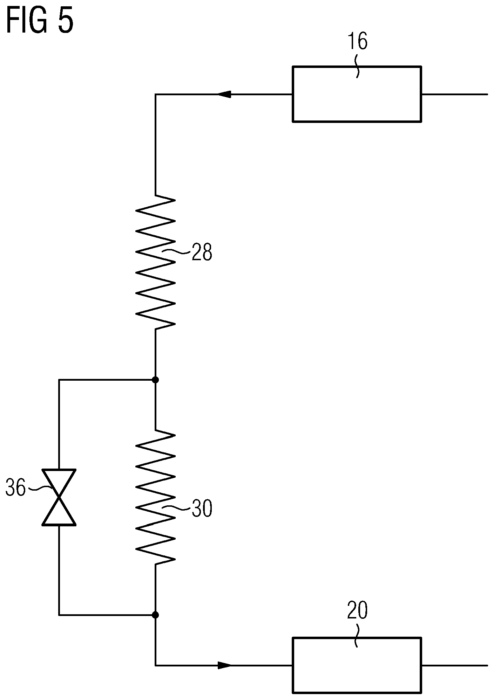

FIG 5 shows a detailed schematic diagram of expansion means 18 of the heat pump system for the laundry dryer according to another embodiment of the present invention. The expansion means 18 of the embodiment shown include the first capillary tube 28, the second capillary tube 30 and the bypass on-off valve 36.

The inlet of the first capillary tube 28 is connected to the outlet of the first heat exchanger 16. The inlet of the second capillary tube 30 is connected to the outlet of the first capillary tube 28. The outlet of the second capillary tube 28 is connected to the inlet of the second heat exchanger 20. Thus, the first capillary tube 28 and the second capillary tube 30 are connected in series. The bypass on-off valve 36 is connected in parallel to the second capillary tube 30.

Preferably, the bypass on-off valve 36 is provided along a bypass line 38 comprising a bypass line inlet arranged between the outlet of the first capillary tube 28 and the inlet of second capillary tube 30 and a bypass line outlet arranged between the outlet of the second capillary tube 30 and inlet of the second heat exchanger 20.
When the bypass on-off valve 36 is closed, then the refrigerant flows in the first capillary tube 28 and the second capillary tube 30. When the bypass on-off valve 36 is open, then the second capillary tube 30 is bypassed, and the refrigerant flows only in the first capillary tube 28. When the bypass on-off valve 36 is open, then the lamination work of the expansion means 18 decreases.

In the above embodiments the expansion means 18 include two capillary tubes 28 and 30 in each case, wherein two different lamination work can be selected. In general, the expansion means 18 may include more capillary tubes 28 and 30 and/or more valves 26, 32, 34 and/o 36, so that more than two different lamination work can be selected.

The control unit 38 controls the valves 26, 32, 34 and/or 36 of the variable expansion means 18, so that the lamination work at said variable expansion means 18 is adapted to operational condition of the heat pump system

According to the present invention, the control unit 38 adjusts the variable expansion means 18 in response to the rotational speed of the compressor, the supply current/voltage frequency f of the compressor motor and/or the absorbed power or current of the compressor 14.
In practise, the control unit 38 is adapted to monitor or determine the rotational speed of the compressor and/or the supply current/voltage frequency f of the compressor motor and/or the absorbed power or current of the compressor 14 and to operate the variable expansion means accordingly.

Preferably via the compressor control line 44 provided between the control unit 38 and the compressor 14, the control unit 38 is adapted to receive signals representative of the rotational speed of the compressor and/or the supply current/voltage frequency f of the compressor motor and/or the absorbed power or current of the compressor 14 or is adapted to receive signal representative of predetermined parameters, which are the basis for the determination of rotational speed of the compressor and/or the supply current/voltage frequency f of the compressor motor and/or the absorbed power or current of the compressor 14.

The control unit 38 sets the variable expansion means 18 to a reduced lamination work, when the output of the compressor 14 is high or is getting higher or start to increase, i.e. high speed, high supply current/voltage frequency and high absorbed power or current.
Conversely, the control unit 38 sets the variable expansion means 18 to an increased lamination work, when the output of the compressor 14 is low or is getting lower o start to decrease.

The adjusting of the variable expansion means 18 is performed by a change of the opening degree of the controllable valve or by selecting the most suitable capillary tube from a plurality of capillary tubes 28 and 30 so that the lamination work generated by the variable expansion means 18 is fitted, in an effective way, to the compressor variable output. The opening degree of the controllable valve can be adjusted continuously.

According to another aspect of the present invention, when the laundry dryer includes at least one drying cycle, in which the compressor operates at different outputs, then the control unit 38 adjusts the variable expansion means 18 according to the drying cycle selected by the user. When the laundry dryer includes different drying cycles, wherein the output is constant (or substantially constant) in each drying cycle, but different from drying cycle to drying cycle, then controller adjusts also the variable expansion means 18 according to the drying cycle selected by the user.

The control unit 38 is adapted to set the variable expansion means 18 to a reduced lamination work according to an increasing output profile of the compressor 14 for the selected drying cycle and to set the variable expansion means 18 to an increased lamination work according to a decreasing output profile of the compressor 14 for the selected drying cycle.

Increasing/decreasing output profile means and increasing/decreasing of the compressor rotational speed and/or the supply current/voltage frequency f of the compressor motor and/or the absorbed power or current of the compressor.

In practise, when the control unit 38 has to actuate the compressor 14 to increase the output established by the selected drying cycle, then the control unit 38 automatically actuates the variable expansion means 18 to a reduced lamination work and when the control unit 38 has to actuate the compressor to decrease the output established by the selected drying cycle, then the control unit 38 automatically actuates the variable expansion means 18 to an increased lamination work.

A further application of the variable expansion means 18 may be an adaption of the pressure drop between a warm-up phase and a steady state phase of the laundry dryer. During the warm-up phase of the laundry dryer, a certain lamination work is advantageous in order to shorten said warm-up phase. When the warm-up phase is over, then the lamination work is adjusted to fit the steady state phase.

Although illustrative embodiments of the present invention have been described herein with reference to the accompanying drawings, it is to be understood that the present invention is not limited to those precise embodiments.

### List of reference numerals

- 10: refrigerant circuit
- 12: air stream circuit
- 14: compressor
- 16: first heat exchanger, condenser
- 18: expansion means
- 20: second heat exchanger, evaporator
- 22: laundry drum
- 24: air stream fan
- 26: three-way valve
- 28: first capillary tube
- 30: second capillary tube
- 32: first on-off valve
- 34: second on-off valve
- 36: bypass on-off valve
- 38: control unit
- 40: control panel
- 42: control line
- 44: compressor control line
- 46: changeover switch

- f: supply current/voltage frequency
- f1: first supply current/voltage frequency
- f2: second supply current/voltage frequency
- f3: supply current frequency/voltage for the fast mode
- f4: supply current frequency/voltage for the eco mode
- P: power
- P1: first power
- P2: second power
- v: motor speed
- v3: motor speed for the fast mode
- v4: motor speed for the eco mode
- t: time

## Claims

1. A laundry dryer with a heat pump system, said heat pump system comprises a refrigerant circuit (10) for a refrigerant and an drying air stream circuit (12) for the drying air stream, wherein
- the refrigerant circuit (10) includes a compressor (14) with variable output, a first heat exchanger (16), variable expansion means (18) to laminate the refrigerant from a higher pressure to a lower pressure and a second heat exchanger (20) connected in series and forming a closed loop,
- the drying air stream circuit (12) includes the first heat exchanger (16), the second heat exchanger (20), a laundry treatment chamber (22) and at least one air stream fan (24),
- the refrigerant circuit (10) and the air stream circuit (12) are thermally coupled by the first heat exchanger (16) and the second heat exchanger (20),
- the first heat exchanger (16) is provided for heating up the air stream and cooling down the refrigerant, and
- the second heat exchanger (20) is provided for cooling down the air stream and heating up the refrigerant,
wherein a control unit (38) is provided to adjust the variable expansion means (18), wherein the control unit (38) is adapted to adjust the variable expansion means (18) in response to at least a compressor quantity representative of the operation of the compressor (14),
wherein the control unit (38) is adapted to monitor or determine at least one of the compressor quantity and to operate the variable expansion means (18) accordingly, and
wherein the control unit (38) is adapted to receive signals representative of at least one of the compressor quantity or the control unit (38) is adapted to receive signal representative of predetermined parameters, which are the basis for the determination of at least one of the compressor quantity,
wherein the control unit (38) is adapted to set the variable expansion means (18) to a reduced lamination work, when the at least one of the compressor quantity is high or starts to increase or increases, the control unit (38) is adapted to set the variable expansion means (18) to an increased lamination work, when the at least one of the compressor quantity is low or starts to decrease or decreases,
**characterized in that**
said compressor quantity is at least one of the following:
rotational speed of the compressor (14),
supply current/voltage frequency of the compressor motor.

2. Laundry dryer according to any of the preceding claims, wherein the variable expansion means (18) comprise at least two capillary tubes (28, 30), wherein at least one of said capillary tubes (28, 30) is switched or switchable by at least one valve (26; 32, 34; 36).

3. Laundry dryer according to claim 2, wherein the expansion means (18) comprises at least two parallel series of a capillary tube (28, 30) and a corresponding on-off valve (32, 34) in each case, wherein the capillary tubes (28, 30) have different lengths and/or different cross-sections.

4. Laundry dryer according to claim 2, wherein the expansion means (18) comprises at least two serial capillary tubes (28, 30), wherein at least one of the capillary tubes (28, 30) is bypassed by an on-off valve (36).

5. Laundry dryer according to any of the preceding claims 2-4, wherein the capillary tubes (28, 30) have different lengths and/or different cross-sections.

6. Laundry dryer according any of the preceding claims 2-4, wherein the capillary tubes (28, 30) have the same lengths and cross-sections.

7. Laundry dryer according to any of the preceding claims 2-6, wherein the expansion means (18) comprises two capillary tubes (28, 30) and a three-way valve (26), wherein the capillary tubes (28, 30) are alternatingly switchable by the three-way valve (26) and the capillary tubes (28, 30) have different lengths and/or different cross-sections.

8. Laundry dryer according to claim 1, wherein the expansion means (18) comprises at least one lamination valve including a variable opening degree, so the pressure drop at said expansion means (18) is adjustable.

9. The laundry dryer according to any one of the claims, wherein the control unit (38) is provided for adapting the lamination work at the expansion means (18) to a warm-up phase and a steady state phase of the process of the heat pump system, wherein the warm-up phase corresponds with a higher lamination work and the steady state phase corresponds with lower lamination work.

## Patentansprüche

1. Wäschetrockner mit einem Wärmepumpensystem, wobei das Wärmepumpensystem einen Kältemittelkreislauf (10) für ein Kältemittel und einen Trocknungsluftstromkreislauf (12) für den Trocknungsluftstrom umfasst, wobei
- der Kältemittelkreislauf (10) einen Verdichter (14) mit variabler Leistung, einen ersten Wärmetauscher (16), variable Entspannungsmittel (18) zum Drosseln des Kältemittels von einem höheren Druck auf einen niedrigeren Druck und einen zweiten Wärmetauscher (20) beinhaltet, die in Reihe geschaltet sind und einen geschlossenen Kreislauf bilden,
- der Trocknungsluftstromkreislauf (12) den ersten Wärmetauscher (16), den zweiten Wärmetauscher (20), eine Wäschebehandlungskammer (22) und mindestens ein Luftstromgebläse (24) beinhaltet,
- der Kältemittelkreislauf (10) und der Luftstromkreislauf (12) durch den ersten Wärmetauscher (16) und den zweiten Wärmetauscher (20) thermisch gekoppelt sind,
- der erste Wärmetauscher (16) zum Erwärmen des Luftstroms und Abkühlen des Kältemittels bereitgestellt ist und
- der zweite Wärmetauscher (20) zum Abkühlen des Luftstroms und Erwärmen des Kältemittels bereitgestellt ist,
wobei eine Steuereinheit (38) bereitgestellt ist, um die variablen Entspannungsmittel (18) einzustellen, wobei die Steuereinheit (38) dafür angepasst ist, die variablen Entspannungsmittel (18) in Reaktion auf zumindest eine den Betrieb des Verdichters (14) repräsentierende Verdichterkenngröße einzustellen,
wobei die Steuereinheit (38) dafür angepasst ist, mindestens eine der Verdichterkenngröße zu überwachen oder zu bestimmen und die variablen Entspannungsmittel (18) entsprechend zu betreiben,
und
wobei die Steuereinheit (38) dafür angepasst ist, mindestens eine der Verdichterkenngröße repräsentierende Signale zu empfangen, oder die Steuereinheit (38) dafür angepasst ist, ein Signal zu empfangen, das vorab bestimmte Parameter repräsentiert, welche die Grundlage für die Bestimmung mindestens einer der Verdichterkenngröße sind,
wobei die Steuereinheit (38) dafür angepasst ist, die variablen Entspannungsmittel (18) auf verringerte Drosselungsarbeit zu stellen, wenn die mindestens eine der Verdichterkenngröße hoch ist oder anzusteigen beginnt oder ansteigt, und die Steuereinheit (38) dafür angepasst ist, die variablen Entspannungsmittel (18) auf erhöhte Drosselungsarbeit zu stellen, wenn die mindestens eine der Verdichterkenngröße niedrig ist oder abzufallen beginnt oder abfällt,
**dadurch gekennzeichnet, dass**
es sich bei der Verdichterkenngröße um mindestens eine der Folgenden handelt:
Drehzahl des Verdichters (14), Versorgungsstrom-/spannungsfrequenz des Verdichtermotors.

2. Wäschetrockner nach einem der vorhergehenden Ansprüche, wobei die variablen Entspannungsmittel (18) mindestens zwei Kapillarrohre (28, 30) umfassen, wobei mindestens eines der Kapillarrohre (28, 30) durch mindestens ein Ventil (26; 32, 34; 36) geschaltet wird oder schaltbar ist.

3. Wäschetrockner nach Anspruch 2, wobei das Entspannungsmittel (18) mindestens zwei parallele Reihen aus jeweils einem Kapillarrohr (28, 30) und einem entsprechenden Schaltventil (32, 34) umfasst, wobei die Kapillarrohre (28, 30) verschiedene Längen und/oder verschiedene Querschnitte aufweisen.

4. Wäschetrockner nach Anspruch 2, wobei das Entspannungsmittel (18) mindestens zwei in Reihe geschaltete Kapillarrohre (28, 30) umfasst, wobei mindestens eines des Kapillarrohre (28, 30) durch ein Schaltventil (36) umgangen wird.

5. Wäschetrockner nach einem der vorhergehenden Ansprüche 2 bis 4, wobei die Kapillarrohre (28, 30) verschiedene Längen und/oder verschiedene Querschnitte aufweisen.

6. Wäschetrockner nach einem der vorhergehenden Ansprüche 2 bis 4, wobei die Kapillarrohre (28, 30) dieselben Längen und Querschnitte aufweisen.

7. Wäschetrockner nach einem der vorhergehenden Ansprüche 2 bis 6, wobei das Entspannungsmittel (18) zwei Kapillarrohre (28, 30) und ein Dreiwegeventil (26) umfasst, wobei die Kapillarrohre (28, 30) durch das Dreiwegeventil (26) abwechselnd schaltbar sind und die Kapillarrohre (28, 30) verschiedene Längen und/oder verschiedene Querschnitte aufweisen.

8. Wäschetrockner nach Anspruch 1, wobei das Entspannungsmittel (18) mindestens ein Drosselventil umfasst, das einen variablen Öffnungsgrad beinhaltet, so dass der Druckabfall an dem Entspannungsmittel (18) einstellbar ist.

9. Wäschetrockner nach einem der Ansprüche, wobei die Steuereinheit (38) dafür bereitgestellt ist, die Drosselungsarbeit an dem Entspannungsmittel (18) an eine Anlaufphase und eine Phase eines stationären Zustands des Prozesses des Wärmepumpensystems anzupassen, wobei die Anlaufphase einer höheren Drosselungsarbeit entspricht und die Phase des stationären Zustands einer geringeren Drosselungsarbeit entspricht.

## Revendications

1. Sèche-linge avec un système de pompe à chaleur, ledit système de pompe à chaleur comprenant un circuit de fluide caloporteur (10) pour un fluide caloporteur et un circuit à flux d'air de séchage (12) pour le flux d'air de séchage, dans lequel
- le circuit de fluide caloporteur (10) comprend un compresseur (14) avec une sortie variable, un premier échangeur de chaleur (16), un moyen de détente variable (18) pour réguler le fluide caloporteur d'une pression supérieure à une pression inférieure et un deuxième échangeur de chaleur (20) raccordé en série et formant une boucle fermée,
- le circuit à flux d'air de séchage (12) comprend le premier échangeur de chaleur (16), le deuxième échangeur de chaleur (20), une chambre de traitement du linge (22) et au moins un ventilateur de flux d'air (24),
- le circuit de fluide caloporteur (10) et le circuit à flux d'air (12) sont reliés thermiquement par le premier échangeur de chaleur (16), le deuxième échangeur de chaleur (20),
- le premier échangeur de chaleur (16) est prévu pour chauffer le flux d'air et pour refroidir le fluide caloporteur, et
- le deuxième échangeur de chaleur (20) est prévu pour refroidir le flux d'air et pour chauffer le fluide caloporteur,
une unité de commande (38) étant prévue pour régler le moyen de détente variable (18),
cette unité de commande (38) étant adaptée de façon à régler le moyen de détente variable (18) en réponse à au moins une grandeur du compresseur représentative du fonctionnement du compresseur (14),
cette unité de commande (38) étant adaptée de façon à surveiller ou à déterminer au moins une de la grandeur du compresseur et à actionner le moyen de détente variable (18) en conséquence, et
cette unité de commande (38) étant adaptée de façon à recevoir des signaux représentatifs d'au moins une de la grandeur du compresseur ou cette unité de commande (38) étant adaptée de façon à recevoir un signal représentatif de paramètres prédéterminés, qui sont la base pour la détermination d'au moins une de la grandeur du compresseur,
cette unité de commande (38) étant adaptée de façon à régler le moyen de détente variable (18) pour un travail de régulation réduit, quand l'au moins une de la grandeur du compresseur est élevée ou commence à augmenter ou augmente, l'unité de commande (38) étant adaptée de façon à régler le moyen de détente variable (18) pour un travail de régulation augmenté, lorsqu'au moins une de la grandeur du compresseur est basse ou commence à diminuer ou diminue,
**caractérisé en ce que**
ladite grandeur du compresseur est au moins une des grandeurs suivantes :
vitesse de rotation du compresseur (14),
fréquence de courant/tension d'alimentation du moteur du compresseur.

2. Sèche-linge selon l'une quelconque des revendications précédentes, dans lequel le moyen de détente variable (18) comporte au moins deux tubes capillaires (28, 30), au moins un desdits tubes capillaires (28, 30) étant commuté ou pouvant être commuté par au moins une vanne (26 ; 32, 34 ; 36).

3. Sèche-linge selon la revendication 2, dans lequel le moyen de détente (18) comporte au moins deux séries parallèles d'un tube capillaire (28, 30) et une vanne tout-ou-rien correspondante (32, 34) dans chaque cas, les tubes capillaires (28, 30) ayant des longueurs différentes et/ou des sections transversales différentes.

4. Sèche-linge selon la revendication 2, dans lequel le moyen de détente (18) comporte au moins deux tubes capillaires en série (28, 30), au moins un de ces tubes capillaires (28, 30) étant contourné par une vanne tout-ou-rien (36).

5. Sèche-linge selon l'une quelconque des revendications précédentes 2 à 4, dans lequel les tubes capillaires (28, 30) ont des longueurs différentes et/ou des sections transversales différentes.

6. Sèche-linge selon l'une quelconque des revendications précédentes 2 à 4, dans lequel les tubes capillaires (28, 30) ont les mêmes longueurs et/ou les mêmes sections transversales.

7. Sèche-linge selon l'une quelconque des revendications précédentes 2 à 6, dans lequel le moyen de détente (18) comporte deux tubes capillaires (28, 30) et une vanne à trois voies (26), ces tubes capillaires (28, 30) pouvant être commutés de manière alternée par la vanne à trois voies (26) et ces tubes capillaires (28, 30) ayant des longueurs différentes et/ou des sections transversales différentes.

8. Sèche-linge selon la revendication 1, dans lequel le moyen de détente (18) comporte au moins une vanne de régulation comprenant un degré d'ouverture variable, de manière à ce que la chute de pression au niveau dudit moyen de détente (18) puisse être réglée.

9. Sèche-linge selon l'une quelconque des revendications, dans lequel l'unité de commande (38) est prévue pour adapter le travail de régulation au niveau du moyen de détente (18) à une phase d'échauffement et à une phase à état stable du processus du système à pompe à chaleur, la phase d'échauffement correspondant à un travail de régulation plus élevé et la phase à état stable correspondant à un travail de régulation plus bas.
